# EUROPEAN PATENT APPLICATION

(11) **EP 1 584 609 A1**
(43) Date of publication of application: **12.10.2005**
(21) Application number: 05075719.4
(22) Date of filing: 29.03.2005
(51) Int. Cl.: C05G 3/00, C05F 17/00, C05F 17/02

(54) **A method and a plant for producing a liquid fertilizer from slurry manure**

(30) Priority: 06.04.2004 DK 200400555
(71) Applicant: H.H. Ide, 6372 Bylderup-Bov (DK)
(72) Inventor: Hoffmann, Henrik, 6372 Bylderup-Bov (DK)
(74) Representative: Holme, Annelise

(57) **Abstract**

A plant and a method for producing a liquid fertilizer (32) from nitrogenous, phosphoric and potassic slurry manure (3), where the slurry manure (3) is continuously collected in a storage tank (2) and is left for sedimentation for a standing period, during which the slurry manure (3) is separated into three basic phases (31,32,33), a bottom phase (33) deposited on the bottom surface (23) of the storage tank (2), said bottom phase being divided into at least three subphases (33a,33b,33c), a liquid middle phase (32) overlaying the bottom phase (33), and a top phase (31) floating on the middle phase (32) in form of a coherent floating material layer (31), where the slurry manure (3) is left until the phosphorous content in the bottom phase (33) is higher than the phosphorous content in the middle phase (32), the bottom phase (33) is removed from the bottom surface (23) of the storage tank (2), the middle phase (32) is removed in form of a liquid fertilizer ready for use without damaging the floating material layer (31), and additional slurry manure and possibly the water fraction from the removed bottom phase (33) is led to the storage tank (2) without significantly damaging the floating material layer (31).

## Description

The present invention relates to a method and a plant for producing a liquid fertilizer from nitrogenous, phosphoric and potassic slurry manure, where the slurry manure continuously is collected in a storage tank and is left for sedimentation for a standing period, during which the slurry manure is separated into three basic phases, a bottom phase deposited on the bottom surface of the storage tank, said bottom phase being divided into at least three subphases, a liquid middle phase overlaying the bottom phase, and a top phase floating on the middle phase in form of a coherent floating material layer.

In the present context slurry manure is to be taken to mean a mixture of at least solid excrements and urine from livestock and possibly bedding material.

The increasing specialization of the agricultural production has resulted in a regionally large concentration of livestock, which makes it more and more difficult for the farmer to meet the demands for harmony between production of nitrogen and phosphorous in the livestock manure and the nutrient needs of the crops. Due to the requirements in the Danish Statutory Order on livestock manure (Consolidated Acts No. 161 of 17/03/2004, No. 753 of 25/08/2001, No. 813 of 19/07/2004, and No. 815 of 20/07/2004) the farmer therefore has to remove the livestock manure from the farm via livestock manure agreements or in form of processed fertilizer which is sold to others. This ensures that generally no overdressing with nitrogen occurs but a considerable overdressing with phosphorous might still occur.

Conventionally the fertilizing value of slurry manure from the agricultural production of pigs, cattle and similar domestic animals is utilized by spreading the slurry manure over the fields as nutrient-rich fertilizer containing among other things nitrogen and phosphorous. The farmer collects the slurry manure in a tank installation which for example can contain up to six months' production of slurry manure. During this period, a large part of the solids content of the slurry manure settles.

When the storage tank is full, it has to be emptied to make room for additional slurry manure which is produced continuously in the production area. This is done by, under vigorous agitation, mixing the solid matter of the slurry manure and the liquid phase to a consistency which makes the mixture suitable for being pumped into e.g. a slurry tanker or conveyed to a separator unit, where the solids content is separated from the slurry manure. It is difficult to mix the bottom phase into the mass, and agitation and mixing of the large, unhomogeneous mass take both time and a very large amount of energy. Conventionally, a mixer is therefore used that is mounted on a tractor or coupled to a motor. Such a mixer typically consumes 90-120 kWh.

As all the phosphorus and nitrogen are mixed into the mass, the mixed manure mass therefore contains far more phosphorus than the fields are able to absorb or is permitted to spread. If this mixed slurry manure is spread directly over the fields, a both illegal and inexpedient leaching of phosphorous to streams or accumulation in the ground water occurs.

Therefore many farmers have to use a separator for preliminarily separate most of the solid matter including large amounts of phosphorous and nitrogen from the slurry manure. The liquid fraction, which is spread over the fields, has however become so nutrient-poor that top-dressing with e.g. bought-in NP/NPK-fertilizer or a part of the extracted solid matter is necessary.

The floating material layer has notoriously proven to be an advantage in open manure tank installation as the floating material layer prevents liquid and nutrients from evaporating from the free surface of the slurry manure and reduces odour nuisances, for example emission of methane from the manure tank. This advantageous floating material layer is destroyed when the tank is emptied in a conventional manner, as described above. Agitation and emptying of the manure tank therefore result in large odour nuisances to the surrounding environment.

The bottom phase has proven to be a very viscous mass that only with difficulty can be mixed with the rest of the slurry manure by agitation. The bottom phase is divided into three subphases. The heaviest bottom subphase next to the bottom surface of the storage tank is relatively solid having a consistency resembling coffee grounds. Above this heavy bottom subphase is a viscous middle subphase and above this phase an upper subphase which is a little less viscous than the middle subphase but still viscous. These three subphases cannot be removed by means of known means without somehow mixing the bottom phase with the rest of the slurry manure in the storage tank. If the storage tank is a lagoon coated by a rubber fabric, it is necessary to show great care if the storage tank, for example, is to be emptied by means of a scraper across the bottom surface of the lagoon.

In a first aspect according to the present invention a method and a plant for producing liquid fertilizer from slurry manure are provided.

In a second aspect according to the present invention a method for removing the bottom phase without emptying the manure tank is provided.

In a third aspect according to the present invention a nonpolluting application of slurry manure is provided.

The novel and unique feature according to the invention, whereby this is achieved, is the fact that the method comprises the steps of leaving the slurry manure for a standing period of a duration long enough for the phosphorous concentration in the bottom phase to become higher than the phosphorous concentration in the middle phase. After this standing period it has surprisingly been found that the middle phase can be removed in form of a liquid fertilizer ready for use without damaging the floating material layer. The bottom phase is removed to a necessary degree from the bottom surface of the storage tank, and additional slurry manure and possibly the water fraction from the removed bottom phase are added to the storage tank without damaging the floating material layer. These steps can be repeated for a very long time, and the need for removing the floating material layer can be reduced considerably.

By means of this method the liquid middle phase will, after standing, have a content of phosphorous, nitrogen and potassium which normally meets the requirements to complete fertilizer, that is fertilizer containing that amount of nitrogen and phosphorous which the ground can absorb on discharge over the fields. The farmer can therefore far easier meet the requirements of the Statutory Order on livestock manure. The nutrient uptake of the crops can be optimised advantageously by spreading the middle phase, and the slurry manure can be processed and utilized at a reduced energy consumption than hitherto known, which makes the method nonpolluting and economically attractive for the farmer to utilize. Even though additional slurry manure is continuously added in small quantities, the nutrient concentration of the middle phase adjusts itself after only a short standing time to the nutrient composition and concentration corresponding to complete fertilizer.

An especially preferred middle phase adjusted to complete fertilizer is obtained if the phosphorous concentration in the basic phases of the slurry manure during the standing period adjusts itself so that the phosphorous concentration of the bottom phase is at least twice, preferably at least thrice and most preferably at least fourfold the phosphorous concentration of the middle phase.

Agitation of the entire content of the tank and the consequent destruction of the floating material layer is not part of the present method. On the contrary, the floating material layer can be kept intact by means of the method according to the present invention much longer than hitherto known and can become much thicker, which further adds to the reduction of the odour nuisances. Thus the odour nuisances and evaporation of especially nitrogen from the open manure tanks can be effectively eliminated or reduced to such an extent that the manure tank can remain completely unnoticed.

The risk of evaporation and odour nuisances from the surface of the storage tank can be further reduced by, as conventionally, adding shredded straw to the floating material layer, but within the scope of the invention also other floating elements, such as e.g. table tennis balls, can be used to further reduce the free surface, and the coherent floating material layer will build itself around and incorporate these elements.

To prevent excess production of the bottom phase in the storage tank and ensure that the middle phase maintains a nutrient content corresponding to aforementioned complete fertilizer, it will be necessary to intermittently remove the bottom phase which continuously accumulates on the bottom of the storage tank.

For this purpose the method according to the invention comprises a mixing of the three subphases of the bottom phase to a coherent mass without significant entrainment of the middle phase, and a pumping off of the mixed bottom phase at a rate corresponding to the rate of conversion of the bottom phase to a coherent mass.

The fertilizer can be produced by means of a plant of the kind described in claim 5, which is particularly arranged to handle the particular division of the bottom phase.

The slurry manure is stored and layered in the storage tank, as mentioned, so that a bottom phase, a middle phase, and a floating material layer are created. A part of the phosphorous content of the slurry manure is bound in the floating material layer typically until a saturation point has been reached. Another and larger part of the phosphorous content of the slurry manure is bound to solid matter in the slurry manure and sedimented together with this solid matter and not easily decomposable nitrogen. The remaining content of phosphorous is dissolved in the middle phase. The nitrogen and potassium contents of the slurry manure are divided in the same sort of way to thereby produce a middle phase in form of a complete fertilizer which can be spread directly over the fields.

The mobile pump unit is arranged to perform a controlled movement over the bottom surface of the storage tank to collect the bottom phase. The three subphases of the bottom phase are mixed in the housing and removed as a coherent mass concurrently with the advance of the pump unit without the bottom phase being stirred up and mixed to any significant extent with the middle phase.

After collection of the bottom phase the liquid level in the storage tank will typically have fallen by 20 - 60 cm. However the floating material layer is deposited intact over the middle phase which now can be completely or partly pumped out of the storage tank to an additional storage tank or a slurry tanker for being spread.

The housing can especially expediently be divided into an intake section with a front intake and an outtake section with a pump to thereby avoid disturbing the middle phase the best possible way during the removal of the bottom phase. To this end the front intake can be arranged with intake means for partly preventing the bottom phase from being mixed into the middle phase during the advance of the pump unit and partly keeping at least the greater part of the drawn-in bottom phase in the housing behind the intake means. The outtake section of the housing can advantageously have mixing means for mixing the bottom phase-subphases supplied from the intake section to a coherent, pumpable mass. To further ensure that the entire part of the bottom phase which is defined by the outline of the storage tank is removed from the bottom surface of the storage tank, entrainment means can be arranged between the intake means and the mixing means to tear at least the heavy bottom subphase of the bottom phase off of the bottom surface of the storage tank. Especially this bottom subphase will be compressed and therefore very difficult to remove by means of conventional means.

The preferred form of the housing is a box of a trapezoidal cross section, an open front side and the short, parallel side of the trapezoid facing oppositely of the bottom surface of the storage tank. This design has the effect of the pump unit being easily detached if it gets stuck in the bottom phase. In addition the inclined sides of the housing cut through the bottom phase resulting in an advantageous minimum of whirling of the bottom phase outside the housing.

The walls of the housing thus protect an area wherefrom bottom phase is removed, and it is important to the working of the method that the pump unit is moved across the bottom surface of the storage tank at an advancing speed adapted to the actual pump capacity so that the bottom phase is not drawn into the intake section but charged into the housing as the pump unit moves across the bottom phase. Therefore the housing must have a front intake of a height that can open over the thickness of the entire bottom phase. A bottom phase of 20 - 70 cm typically settles in storage tanks of a height of 4 - 5 m, which require a front intake of mainly this height. Advantageously the opening of the front intake can therefore comprise a height-adjustable shield.

In one embodiment of the present invention the mixing means comprise at least one rotatable shaft with paddles, and the entrainment means comprise at least one rotatable shaft with a centre-offset rod, a sweep paddle or a wing. An entrainment means constructed in such a way forces and primarily draws the bottom subphase free of the bottom surface of the storage tank and up into the housing for mixing with the other fed subphases when the shaft is rotated.

To further prevent whirling up of bottom phase outside the shielded sides, the intake means can comprise a number of evenly distributed chains freely suspended in the front intake. Preferably these chains are weighed down toward the bottom surface of the storage tank by means of weights or the like, and will therefore also contribute to the cutting up of the bottom phase in the direction of advance of the pump unit. At the same time the chains contribute to the preventing of bottom phase already drawn into the intake section from escaping again but instead being conveyed towards the outtake section for discharging.

Combinations of variants of the above means for mixing the bottom phase drawn in by the housing and retention of bottom phase in the housing are comprised within the scope of the invention.

For example, the paddles can be one or more propellers suspended in the box, and the chains can be replaced by rods.

The pump unit can be made mobile by e.g. using a motor and a number of wheels. The motor can e.g. be a step motor comprising a hydraulic plunger and a gear arrangement, in which the gear arrangement is drive-connected to the wheels. Typically the motor is on the pump unit and drives both wheels and possibly the mixing means, for example the rotatable shafts with paddles or centre-offset rods. By means of a gearing, for example the shafts of the entrainment means can be made to rotate faster than the wheels so that the bottom phase is better mixed. The motor can furthermore be attached to the wheels so that the pump unit can be moved across the bottom surface, for example by means of a gearing. Thereby the speed can be controlled possibly by means of a control to adapt it to all the different conditions in the bottom phase of the slurry manure. Furthermore, the wheels can be connected separately so that the pump unit can be turned by specifying the individual speed of advance of each wheel.

To control and ensure that the pump unit covers the entire bottom surface of the storage tank, the propulsion means of the pump unit comprises a control arranged to move the pump unit in a predetermined pattern across the bottom surface of the storage tank. The control can for example be an electric control receiving impulses from control sensors on the pump unit and turning every time it reaches an obstacle.

In an especially preferred embodiment of a plant according to the invention the storage tank comprises a number of signalling devices communicating with at least one signal receiver on the pump unit, and the pump unit has a control arranged to move the pump unit in a predetermined pattern across the bottom surface of the storage tank based on this communication. Alternatively, the signalling devices communicate with a satellite.

This means that the signalling devices which are located along the edge or next to the storage tank send signals to the signal receiver which is located on the pump unit, whereby a control typically on the pump unit or connected to an extern computer can determine the position, direction and speed of the pump unit.

Alternatively the pump unit can be constructed in such a way that it is forced to drive in a helical curve of a spacing corresponding to the width of the pump unit so that when the pump unit is placed into a typically circular manure storage tank, the entire bottom phase is removed from the bottom surface of the storage tank in one single work cycle.

If the pump unit is controlled for example by a computer which, by means of the signalling devices and signal receivers, controls where the pump unit will drive, it is also possible to drive in all directions in the storage tank or in a predetermined pattern to thereby ensure that the entire area of the bottom surface is cleaned.

Alternatively the control can be programmed to simultaneously calculate the speed and advancing of both the pump unit and the rotating shafts of the mixing and entrainment means on basis of signals from any signalling devices along the edge of the storage tank.

If quick production of complete fertilizer is needed, settling promoting agents, such as ash, sulphur and/or lime, can possibly be added to the slurry manure to thereby produce the desired middle layer very quickly.

To ensure that the floating material layer is not broken in too many places during the moving of mobile pump unit across the bottom surface of the storage tank, the pump unit can comprise a flexible hose for transporting the mixed bottom phase up from the storage tank to e.g. a separator unit. The flexible hose, which is heavier than the slurry manure, makes it easy to guide the pump unit down into the storage tank and at the same time get the hosing to the separator unit. The hose can, especially advantageously, be supplied with a number of buoyant elements and be fixed to an area of the wall of the storage tank. In this way, the flexible hose can extend through the middle layer of the slurry manure without sinking to the bottom or being forced up towards the floating material layer and thereby destroy this floating material layer.

In another embodiment of the present invention the pump unit is a stationary unit arranged in the bottom part of the storage tank. The bottom part is provided with a movable filter unit. The bottom part can e.g. be conical with a srew located therein and connected to the pump unit so that the bottom phase is forced down into the screw by the filter unit and then conveyed further on to the separator unit. The movable filter unit, which is arranged in the storage tank, covers the entire area of the storage tank and has a density and filtration capability that mean that it sinks slowly down through the slurry manure and down towards the bottom surface of the storage tank at the same time as the slurry manure is filtered, whereby larger particles and solid matter are forced down towards the bottom part where the pump unit is arranged, while liquid and smaller particles diffuse through the filter unit. When the filter unit has sunk all the way to the bottom, it is thus possible to pump the homogeneous part of the slurry manure out of the storage tank into a slurry tanker or another storage tank.

Preferred embodiments of the plant according to the invention is explained in the following with reference to the drawing, in which:
Fig. 1 is a simplified plan of a conventional slurry tank,
Fig. 2 is a simplified plan of a known slurry manure treatment plant,
Fig. 3 is a simplified plan of a first embodiment of the plant according to the invention,
Fig. 4 is a simplified plan of an alternative embodiment of the plant according to the invention,
Fig. 5 is a simplified plan of a first embodiment of a pump unit for use in the method and plant according to the invention,
Fig. 6 is a simplified plan of the movement pattern of a pump unit in a storage tank,
Fig. 7 is a simplified plan of an alternative movement pattern of a pump unit in a storage tank,
Fig. 8 is a simplified plan of a pump unit with hose connection according to the invention,
Fig. 9 is a diagrammatic, longitudinal sectional view of an alternative embodiment of a pump unit according to the invention, and
Fig. 10 is a diagrammatic front view of the embodiment in fig. 9 without the front wheel.

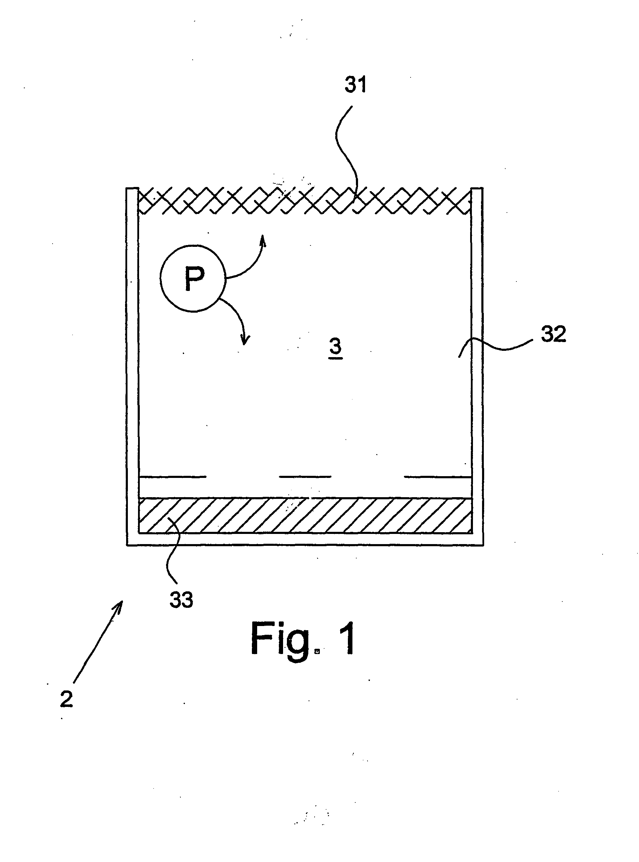

Fig. 1 shows a conventional storage tank 2 containing slurry manure 3 where the slurry manure 3 is layered so that a floating material layer 31, a middle phase 32, and a bottom phase 33 are formed. Fig. 1 further illustrates how phosphorous particles 14 are found freely in the slurry manure 3. On standing a first phosphorous fraction binds itself to the floating material layer 31 until saturation. A second phosphorous fraction is bound to the solid matter particles of the slurry manure and settles together with these particles to form the bottom phase 33.

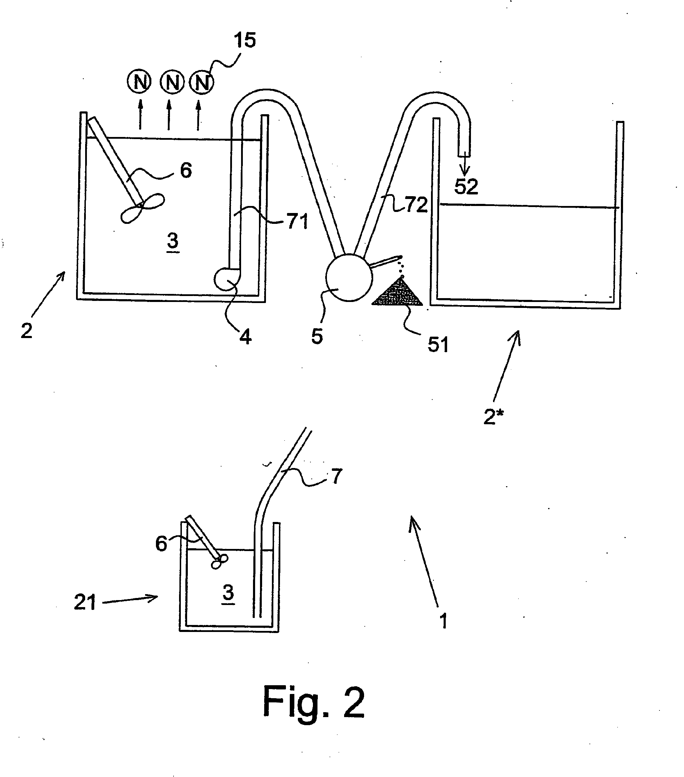

Fig. 2 shows a known slurry manure treatment plant 1 in which a first storage tank 2 contains slurry manure 3. To obtain a pumpable, homogeneous mass the slurry manure is agitated by means of an agitator 6 so that the pump unit 4 can pump this mass further on in the supply hose 71 to the separator unit 5 where a separation takes place into two fractions - a solid matter fraction 51 containing phosphorous and nitrogen which is stored, while the liquid fraction 52 is moved on in the return hose 72 to a second storage tank 2*.

The agitator 6 makes a homogeneous slurry mass 3 in the first storage tank 2. During agitation an evaporation of nitrogen particles 5 and other odorous particles takes place from the surface of the storage tank 2, which is inappropriate with respect to the surroundings. The produced, thin liquid fraction 52 in storage tank 2* is ready to be spread over the fields as fertilizer.

A pretank 21 is also shown with an agitator 6, which pretank 21 is typically used for daily collection of slurry manure 3 from the production area. The daily agitation with agitator 6 means that the slurry manure 3 is pumpable and can be pumped on through the piping 7 to the first storage tank 2, which means that the first storage tank 2 does not have to be located immediately against the production buildings.

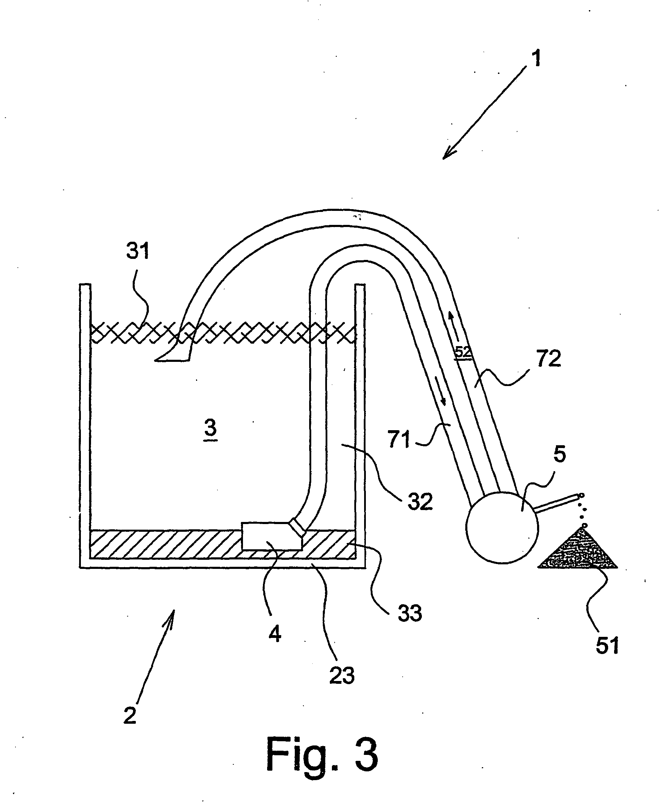

Fig. 3 shows a plant 1 according to the invention consisting of a storage tank 2 full of slurry manure 3, and in which the slurry manure 3 is layered into a floating material layer 31, a middle phase 32, and a bottom phase 33. To utilize the slurry manure 3 as complete fertilizer it is expedient to remove the bottom phase 33 from the storage tank 2 by means of a pump unit 4 connected to the separator unit 5 via the supply hose 71, and the pump unit 4 is arranged to move across the bottom surface 23 of the storage tank 2 so that it can collect the bottom phase 33.

In connection with a separator unit 5 the slurry manure 3 is separated into a liquid fraction 52 and a solid matter fraction 51, where the solid matter fraction 51 is stored while the liquid fraction 52 is conveyed back to the storage tank 2 via return hose 72 and pumped down under the floating material layer 31.

As seen in fig. 3, it is possible to remove the entire bottom phase 33 without disturbing or destroying the floating material layer 31 as only the supply hose 71 and the return hose 72 break the floating material layer 31, and both can be kept fixed in relation to the storage tank, if need be.

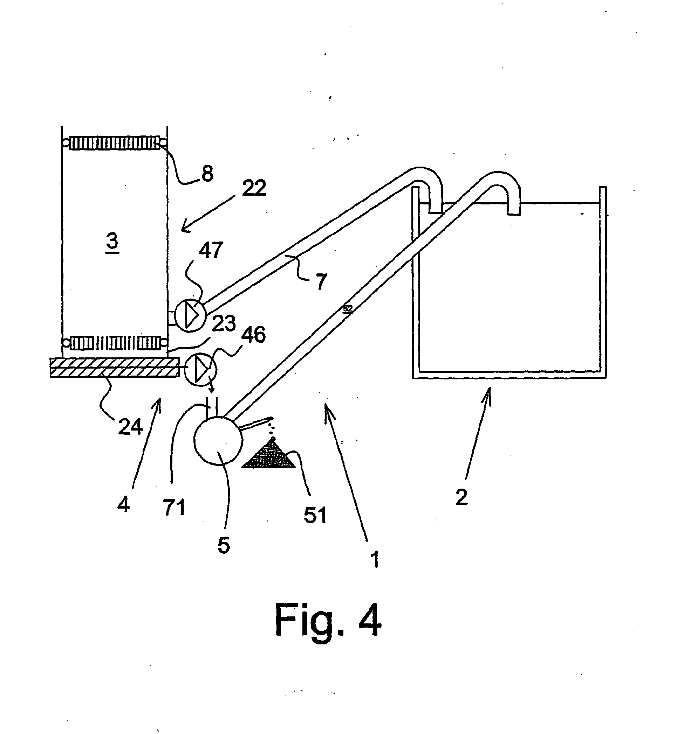

Fig. 4 shows an alternative plant 1 in which a filter tank 22 is mounted having a bottom surface 23 provided as intake to the stationary pump unit 4. The filter tank 22 is provided with a movable filter 8 constructed in such a way that it covers the entire cross-sectional area of the filter tank 22' and it is placed at the top of the filter tank 22 after filling of the filter tank 22 so that solid matter and larger particles are retained in the filter 8 whereas smaller particles and liquid filter through the filter 8.

The filter 8 has a density and filtration capability that mean that the filter 8 moves slowly down through the slurry manure, for example by 0.5 m per day, which means that it takes up to one week before the filter 8 has sunk down through the filter tank 22. This results in a good filtration of solid matter and larger particles.

When the filter 8 is in a bottom position, as shown in broken line in fig. 4, it is possible to pump the filtered slurry manure 3 to the storage tank 2 via piping 7 and pump 47. The filtered-off part of the slurry manure 3 containing solid matter is forced down towards the bottom surface 23, after which pump unit 4 comprising a screw 24 and a pump 46 conveys the slurry manure 3 to separator unit 5 via supply hose 71, in this unit a separation into two fractions takes place - a solid matter fraction 51 which is stored, and a liquid fraction 52 which is moved on to storage tank 2 via return hose 72. The storage tank 2 now contains a mixture of filtered slurry manure and liquid fraction 52. The filtered slurry manure has a nutrient content very similar to complete fertilizer and is therefore suitable for being spread over the fields.

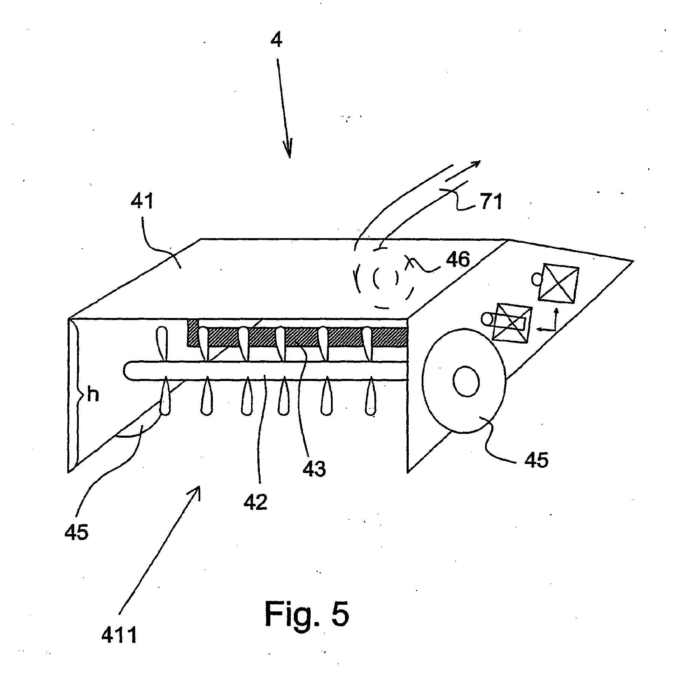

Fig. 5 shows a first embodiment of a mobile pump unit 4, in which the housing 41 has a front intake 411 which furthermore opens downward. The housing 41 is divided into an intake section 412 and an outtake section 413.

The housing 41 furthermore comprises a motor (not shown) and a number of wheels so that the housing can be moved around on the bottom surface of the storage tank. In order to process and pump the bottom phase (not shown) out of the storage tank (not shown) a number of shafts are located in the intake 411, in the case shown a shaft with paddles 42 and a shaft with a centre-offset rod 43 which upon rotation ensure that the bottom subphases (not shown) of the slurry manure are mixed so that these can be transported via pump 46 and supply hose 71 to a separator unit (not shown).

The housing 41 is designed so that it has a height h corresponding to the thickness of the bottom phase (not shown). This height h is typically between 30 to 70 cm.

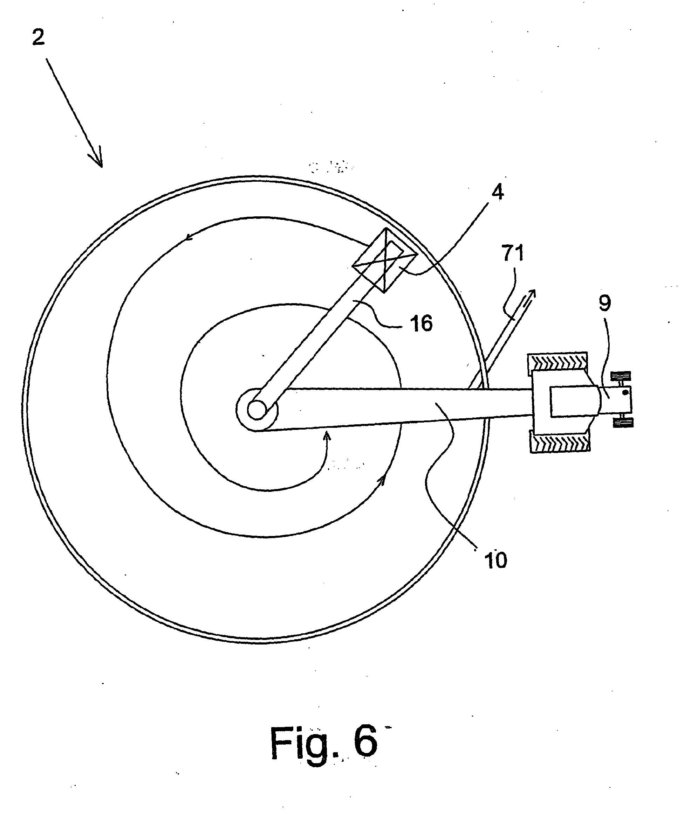

Fig. 6 shows how a pump unit 4 is mounted on a boom connected to a tractor 9. By means of the tractor 9 the boom 10 is placed over the middle of the storage tank 2. Then the pump unit 4 is lowered down into the storage tank 2 along the edge of the tank. The pump unit 4 is connected to the boom 10 via connecting members 16 and is here shown in an inwardly spiralling movement, which means that the pump unit will empty the entire bottom surface 23 of the storage tank 2 slowly but surely and pump bottom phase (not shown) out to a separator unit (now shown) via supply piping 71.

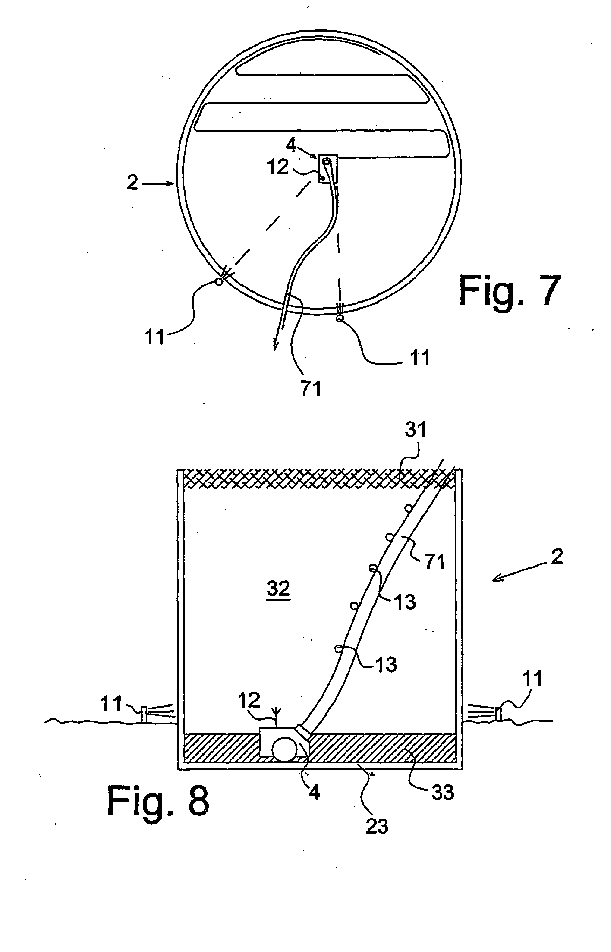

Fig. 7 shows how a mobile pump unit 4 is located in a storage tank 2 and equipped with a signal receiver 12 receiving signals from signalling devices 11 located along the edges of the storage tank 2, which means that the control of the pump unit 4 can predict the exact position and direction, in which the pump unit 4 is to move.

Fig. 8 shows how the pump unit 4 is collecting the bottom phase 33 in storage tank 2 and that a signal is sent via the signalling devices 11 to the signal receivers 12 so that it is possible to control the pump unit 4.

From the pump unit 4 the supply hose 71 extends up through the middle phase 32 and out through the floating material layer 31. To ensure that the pump unit 4 can move freely, the supply hose 71 is provided with a number of buoyant elements 13. This means that the supply hose 71 does not drop down towards the bottom surface 23 but floats in the middle phase 32 without breaking the floating material layer 31 in any other places than where the supply hose 71 is led through and out to the separator unit (not shown).

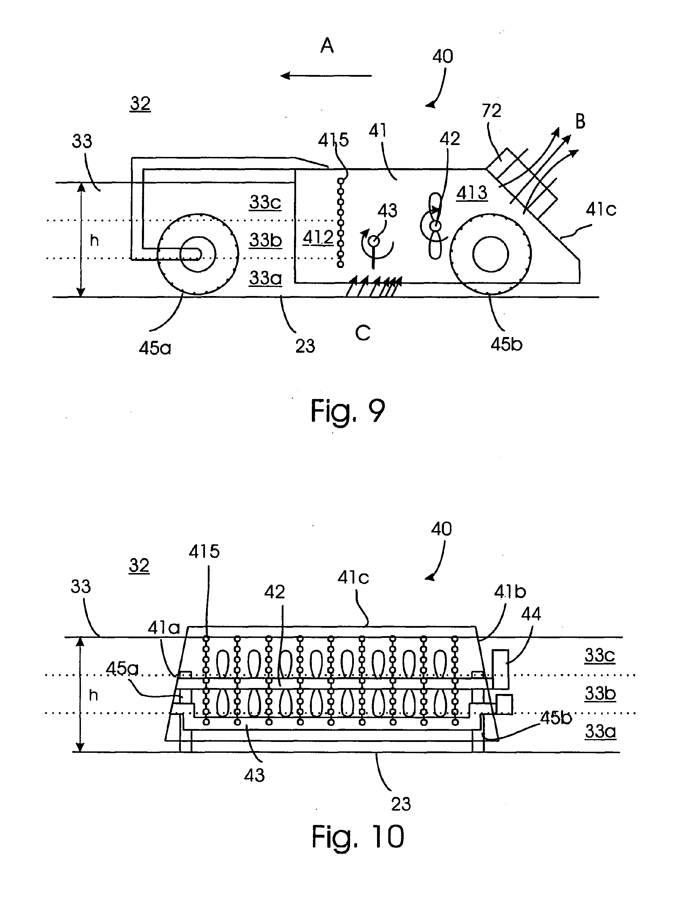

Figs. 9 and 10 are diagrammatical longitudinal sectional and front views, respectively, of a second embodiment of a pump unit 40 for use in the method according to the present invention. The pump unit 40 moves in the direction shown by arrow A across the bottom surface 23 of the storage tank 2 to take the bottom phase 33 of height h in through the front intake 41 via the intake section 412 of the housing 41 to the outtake section 413 and further out through the return hose 72 in direction of arrow B.

Fig. 9 furthermore shows diagrammatically the dividing of the bottom phase 33 into three subphases, a heavy, coffee ground-like bottom subphase 33a having a small liquid content, a viscous middle subphase 33b having a higher liquid content, and an upper subphase 33c having the highest liquid content, respectively. As mentioned, it is this division into subphases that makes it difficult to remove bottom phase which cannot be directly pumped or drawn away from the bottom surface of the storage tank without damaging this bottom surface or whirling bottom phase up into the middle phase.

By using the pump unit 40 it is however possible to avoid these disadvantages in an especially effective manner and at the same time mix the three subphases to a homogeneous, coherent mass containing enough liquid to be pumped up from the bottom surface of the storage tank without disturbing the surroundings of the pump unit, that is to say without the middle phase being significantly mixed into the subphases and still keep the floating material layer as intact as possible.

The pump unit 40 has a front guide wheel 45a connected to the housing 41 and two rear wheels 45b arranged along the side walls 41a,41b of the housing, and advance is controlled by a motor, not shown. In intake section 412 of housing 41 chains 415 are suspended, of which a total of nine are shown in fig. 2 merely as an example, partly for assisting in retaining the drawn-in bottom phase 33 in the housing 41 while this bottom phase 33 is mixed during the further advance of the pump unit 40, and partly for cutting up the bottom phase 33 so that it more easily can be drawn in and charged into the housing 41. Behind the chains 415 is arranged, between the outwardly inclining side walls 41a,41b of the housing, a centre-offset, rotatable shaft 42 for, via its rotating movement, hurling bottom phase 33 up towards a rotatable shaft with paddles 42 suspended in the outtake section 413. The shaft 42 especially draws compressed bottom subphase 33a free of the bottom surface 23 of the storage tank 2 inside the shielded, inclined side walls 41a,41b and end wall 41c of the housing 41, as shown by small arrows C at the bottom surface 23. The rotating shaft 42 with paddles in the end mixes the drawn-in and entrained subphases 33a,33b,33c sufficiently for this mixed mass to be pumped out of the housing 41 at a rate corresponding to the speed of advance of the pump unit.

The mass can be postprocessed for example by separation or depositing as described in connection with the other embodiments.

## Claims

1. A method for producing a liquid fertilizer (32) from nitrogenous, phosphoric and potassic slurry manure (3), in which the slurry manure (3) continuously is collected in a storage tank (2) and is left for sedimentation for a standing period, during which the slurry manure (3) is separated into three basic phases (31,32,33), respectively
- a bottom phase (33) deposited on the bottom surface (23) of the storage tank (2), said bottom phase being divided into at least three subphases (33a,33b,33c),
- a liquid middle phase (32) overlaying the bottom phase (33), and
- a top phase (31) floating on the middle phase (32) in form of a coherent floating material layer (31),
**characterized in that** the method comprises the steps of
- leaving the slurry manure (3) until the phosphorous concentration in the bottom phase (33) is higher than the phosphorous concentration in the middle phase (32),
- removing the bottom phase (33) from the bottom surface (23) of the storage tank (2),
- removing the middle phase (32) in form of a liquid fertilizer ready for use without damaging the floating material layer (31), and
- adding additional slurry manure and possibly the water fraction from the removed bottom phase (33) to the storage tank (2) without significantly damaging the floating material layer (31).

2. A method according to claim 1, **characterized in that** removal of bottom phase (33) comprises
- mixing the three subphases (33a,33b,33c) of the bottom phase (33) into a coherent mass substantially without entraining the middle phase (32), and
- pumping the mixed bottom phase out at a rate corresponding to the rate with which the bottom phase (33) is converted into a coherent mass.

3. A method according to claim 1, **characterized in that** shredded straw is added to the floating material layer (31).

4. A method according to claim 1, **characterized in that** the phosphorous concentration in the three basic phases (31,32,33) of the slurry manure (3) during the standing period adjusts itself so that the phosphorous concentration in the bottom phase (33) is at least twice, preferably at least thrice and most preferably at least fourfold the phosphorous concentration of the middle phase (32).

5. A plant (1) for producing a liquid fertilizer (32) from nitrogenous, phosphoric and potassic slurry manure (3), in which the slurry manure (3) is continuously collected in a storage tank (2) and is left for sedimentation, in which the slurry manure (3) after standing divides into at least three basic phases (31,32,33), a bottom phase (33) deposited on the bottom surface (23) of the storage tank (2), said bottom phase being divided into at least three subphases (33a,33b,33c), and a liquid middle phase (32) overlaying the bottom phase (33), respectively, and a mobile pump unit (4;40) arranged in the storage tank (2) for removing a settled bottom phase (33) by moving across the bottom surface (23) of the storage tank (2), in which the pump unit (4;40) is of the kind comprising a housing (41) having a front intake (411), through which bottom phase (33) is drawn in, means for driving the pump unit (4;40) and a pump (47) for removing the bottom phase (33) from the housing (41),
**characterized in**
**that** the pump unit (4;40) has means (42,43) for mixing the three subphases (33a,33b,33c) of the bottom phase (33) to a coherent mass without significantly entraining the middle phase (32), and that the advance speed of the pump unit (4;40) allows the pump (47) to remove the continuously produced, coherent mass concurrently with the production of this mass without damaging a liquid top phase on the middle phase (32) in form of a coherent floating material layer (31).

6. A plant (1) according to claim 1, **characterized in that** the housing (41) of the pump unit (4;40) is divided into an intake section (412) having the front intake (411) and an outtake section (412) having the pump (47), in which the front intake (41) is arranged with intake means (415) for partly preventing the bottom phase (33) from being mixed into the middle phase (32) during the advance of the pump unit (4;40), and partly for keeping at least the greater part of the drawn-in bottom phase (32) in the housing (41) behind the intake means (415), that the outtake section (413) has mixing means (42) for mixing the three subphases (33a,33b,33c) of the bottom phase (33) supplied from the intake section (412) into a coherent, drawable mass, and entrainment means (43) arranged between the intake means (412) and the mixing means (42) for tearing at least the heavy bottom subphase (33a) of the bottom phase (33) off of the bottom surface (23) of the storage tank (2).

7. A plant (1) according to claim 5 or 6, **characterized in that** the mixing means (42) comprise at least one rotatable shaft with paddles (42), and that the detachment means (43) comprise at least one rotatable shaft (43) with a centre-offset rod, a sweep paddle or a wing.

8. A plant (1) according to claim 5, 6 or 7, **characterized in that** the intake means (415) comprise a number of evenly distributed chains (415) freely suspended in the front intake (41).

9. A plant (1) according to any of the claims 5 - 8, **characterized in that** the housing (41) is constructed with a trapezoidal cross section.

10. A plant (1) according to any of the claims 5 - 9, **characterized in that** the storage tank (2) comprises a number of signalling devices (11) communicating with at least one signal receiver (12) on the pump unit (4;40), and that the pump unit (4;40) has a control arranged to move the pump unit (4;40) in a predetermined pattern across the bottom surface (23) of the storage tank (2) on basis of this communication.
